## Europäisches Patentamt
## European Patent Office
## Office européen des brevets

(19)

(11) Numéro de publication : **0 357 744 B1**

(12)

# FASCICULE DE BREVET EUROPEEN

(45) Date de publication du fascicule du brevet :
29.04.92 Bulletin 92/18

(51) Int. Cl.⁵ : **B05B 3/10,** A01M 7/00

(21) Numéro de dépôt : **89903182.7**

(22) Date de dépôt : **24.02.89**

(86) Numéro de dépôt international :
**PCT/FR89/00073**

(87) Numéro de publication internationale :
**WO 89/08504 21.09.89 Gazette 89/23**

(54) **APPAREIL DE PULVERISATION CENTRIFUGE A FLUX D'AIR CYCLONIQUE.**

(30) Priorité : **07.03.88 FR 8803011**

(43) Date de publication de la demande :
**14.03.90 Bulletin 90/11**

(45) Mention de la délivrance du brevet :
**29.04.92 Bulletin 92/18**

(84) Etats contractants désignés :
**DE FR GB IT NL**

(56) Documents cités :
**AU-A- 449 483**
**FR-A- 1 217 119**
**FR-A- 2 570 959**
**US-A- 3 133 702**
**US-A- 3 421 697**
**US-A- 3 552 652**

(73) Titulaire : **AIRBI S.A.**
**Z.A. La Sablière Route de Soissons, BP 243**
**F-02406 Chateau-Thierry (FR)**

(72) Inventeur : **BIDON, Daniel**
**6, rue S.-Crépin**
**F-02406 Château-Thierry (FR)**
Inventeur : **GARET, Joelle**
**6, rue S.-Crépin**
**F-02406 Château-Thierry (FR)**

(74) Mandataire : **Gérardin, Robert Jean René**
**PROT'INNOV INTERNATIONAL SA 18 et 18bis,**
**rue de Bellefond BP 328-09**
**F-75428 Paris Cèdex 09 (FR)**

# Description

L'invention concerne un appareil de pulvérisation centrifuge à pulvérisateur tournant et à flux d'air cyclonique.

De nombreux appareils de pulvérisation centrifuges, notamment d'adjuvants chimiques sur les cultures, existent actuellement.

Certains de ces appareils comportent des disques verticaux ou horizontaux, d'autres utilisent des cônes par l'intermédiaire desquels le liquide est expulsé par la force centrifuge.

Tous ces appareils présentent l'inconvénient de générer des gouttelettes fines qui pénètrent mal dans les cultures hautes et qui sont souvent emportées par le vent en dehors de la surface à traiter.

Pour remédier à cette situation, certains constructeurs ont en recours à l'adjonction d'un ventilateur pour forcer les gouttelettes à suivre une trajectoire plus tendue, par conséquent mieux dirigée vers la surface à traiter.

On connaît déjà des appareils de pulvérisation comportant un élément d'atomisation tournant couplé à un ventilateur axial de manière à former avec celui-ci un ensemble tournant, tels que ceux décrits dans les brevets français:

– FR-A-2.464.101 pour un appareil pulvérisateur de distribution de liquide, notamment d'adjuvants chimiques pour culture, qui se caractérise principalement en ce que le ventilateur axial est placé à l'intérieur d'un capot de forme aérodynamique destiné à contrôler le flux d'air, de sorte que, en utilisation, le courant d'air balaye l'atomiseur rotatif de manière à disperser les gouttelettes engendrées par celui-ci.

– FR-A-2.507.104 ayant pour objet un appareil pulvérisateur de liquide qui se distingue de celui précédemment évoqué par le fait qu'une ou plusieurs aubes sont montées à l'intérieur du cylindre perforé de l'atomiseur rotatif et pouvant tourner avec ledit cylindre, de façon à intercepter le liquide et à effectuer une fragmentation initiale de son écoulement lorsqu'il passe vers l'extérieur, à partir de la broche, dans le cylindre perforé.

Le fait que le ventilateur axial soit monté à l'intérieur d'un capot cylindrique se traduit par la production d'un flux d'air cylindrique qui contrarie la dispersion des gouttelettes produites par l'atomiseur rotatif, malgré l'adjonction d'aubes radiales tournantes à l'intérieur du cylindre perforé.

De plus, cette concentration de flux d'air par l'intermédiaire d'un carénage cylindrique se traduit par un retour de flux très important sensible à la dérive que l'on cherche précisément à éviter.

L'appareil de pulvérisation centrifuge à pulvérisateur tournant et à flux d'air cyclonique selon l'invention vise à remédier aux inconvénients ci-dessus exposés, en résolvant le problème consistant à combiner la production de très fines gouttelettes à celles d'un flux cyclonique de forme sensiblement conique assurant le brassage et la dispersion des gouttelettes.

L'appareil de pulvérisation centrifuge à ventilateur, à pulvérisateur tournant et à flux d'air cyclonique selon l'invention se caractérise principalement en ce que les pales du ventilateur sont fixées radialement autour d'un cylindre creux, à la partie supérieure de celui-ci, juste au dessus de la partie percée de multiples orifices constituant le pulvérisateur rotatif. Ce cylindre creux est relié à son moteur d'entrainement par l'intermédiaire d'un arbre offrant une certaine flexibilité. La sortie évasée des orifices de pulvérisation est tronconique. Le cylindre creux est alimenté par un nombre d'injecteurs correspondant à la diversité des produits à mélanger au moment de la pulvérisation.

La partie du cylindre creux sur laquelle se fixent les pales du ventilateur est d'un diamètre supérieur à celui de la partie comportant les multiples orifices de pulvérisation.

La partie du cylindre creux sur laquelle se fixent les pales du ventilateur, comporte autant de méplats d'appui que de pales. La distance des méplats par rapport à l'axe de rotation correspond approximativement 1,5 fois le rayon de la partie du cylindre creux comportant les orifices de pulvérisation, constituant le pulvérisateur rotatif.

Les pales du ventilateur sont reliées au rotor creux par l'intermédiaire d'un pied cylindrique maintenu en appui dans un lamage de forme et de profondeur correspondantes réalisé dans le méplat d'appui, par l'intermédiaire d'un axe fileté et d'un écrou autofreineur. Le pas des pales du ventilateur est réglable.

Les pales comportent un extrados convexe, un intrados concave, un bord d'attaque elliptique et un bord de fuite effilé.

La partie tronconique des orifices de pulvérisation a un diamètre de base **D** correspondant à 1,5 fois le diamètre **d** de l'orifice d'entrée et une conicité **alpha** minimum de 10°.

La longueur **L** de la partie cylindrique des orifices de pulvérisation correspond à deux fois le diamètre **d** d'entrée des orifices.

La hauteur de la partie du cylindre creux sur laquelle se fixent les pales représente environ 0,6 fois la hauteur totale de celui-ci.

Les injecteurs comportent des buses multiples, de section décroissante vers l'extrémité de la buse, réparties sur une longueur correspondant à la hauteur de la partie de cylindre creux comportant les orifices de pulvérisation, constituant le pulvérisateur rotatif.

La paroi interne du cylindre creux comporte une collerette située juste au dessus de la partie comportant les orifices de pulvérisation.

Les avantages obtenus par cette invention consistent essentiellement en ceci que les gouttelettes produites sont plus fines et mieux calibrées, la surface couverte peut être réglée en faisant varier le pas des pales, le diamètre maximum de projection reste constant quel que soit l'éloignement de la cible, l'injection multiple de produits différents directement et séparément dans le pulvérisateur, permet de moduler le traitement en fonction des particularités de la cible, la réalisation monobloc de l'ensemble facilite le montage et l'entretien, et l'encombrement est très faible, comparé aux autres moyens.

D'autres caractéristiques et avantages apparaîtront dans la description qui va suivre d'un appareil de pulvérisation pour le traitement des cultures, réalisé selon l'invention, donné comme exemple non limitatif au regard des dessins annexés sur lesquels :

   – la figure 1 représente une vue de face, en coupe longitudinale, de l'appareil en fonctionnement,

   – la figure 2 représente une vue de face du pulvérisateur,

   – la figure 3 représente une vue de dessus du pulvérisateur,

   – la figure 4 représente une vue en coupe partielle du cylindre creux au niveau d'un orifice de pulvérisation.

Les figures représentent un cylindre creux **10** dont la partie inférieure, constituant le pulvérisateur rotatif est percée d'orifices **11** et dont la partie supérieure comporte des méplats **12** à lamages **13**, contre lesquels sont fixées des pales **20** comportant un pied cylindrique **21** prolongé par une tige filetée **22** munie d'un écrou **3** ; le cylindre creux **10** étant alimenté par des injecteurs **40** et **50** percés de buses **41**, et relié à l'arbre de sortie **6** du moteur d'entrainement **7** par l'intermédiaire d'un arbre creux **14** ; la paroi interne du cylindre creux est séparée dans le sens de la hauteur par une collerette **15** située juste au dessus de la première rangée d'orifices de pulvérisation **11**.

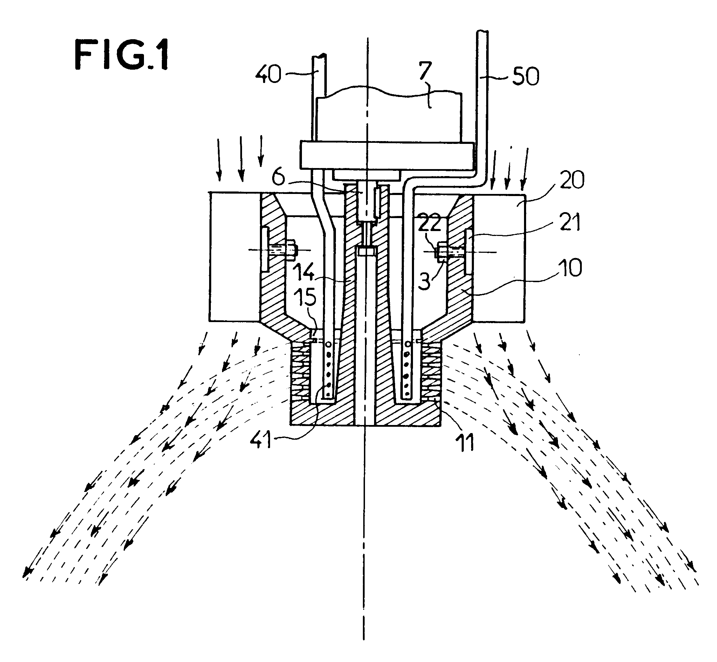

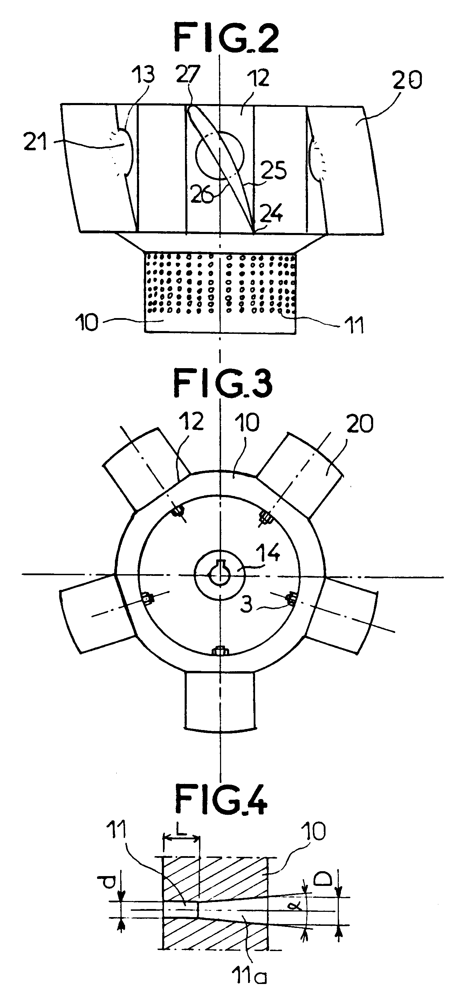

En examinant les figures **1**, **2** et **3**, on remarque que, grâce à une forme de pale particulière, le ventilateur n'est ni axial, ni radial, mais constitue une combinaison des deux qui permet de produire un flux conique et cyclonique. C'est donc une véritable jupe d'air qui vient ainsi s'insérer dans les gouttelettes de liquide pulvérisé pour conduire celles-ci vers la cible. L'inclinaison des pales **20** est réglable par l'intermédiaire de la tige filetée **22** et de l'écrou **3**. Plus le pas des pales est faible et plus l'ouverture du cône est importante. Il est possible d'obtenir ainsi une cloche d'air d'un diamètre au sol de 1,5 mètre pour un éloignement de 0,5 mètre.

Le ou les produits à pulvériser sont introduits dans le cylindre creux **10** par l'intermédiaire des injecteurs **40** et **50** qui assurent un débit régulier par l'intermédiaire des buses **41**. La centrifugation du mélange de produits contre la paroi interne du cylindre creux assure l'alimentation des orifices de pulvérisation **11** par la formation d'un film d'épaisseur décroissante dont la progression vers le haut est limitée par la collerette circulaire **15**.

Les orifices **11** assurent l'écoulement vers l'extérieur du film de produits, tout en assurant sa fragmentation en gouttelettes très fines par l'intermédiaire de la partie conique **11a** dont l'angle **alpha** est voisin de 10° afin d'éviter les décollements de veines liquides et les obstructions.

A la sortie des orifices **11**, les gouttelettes rencontrent le souffle d'air produit par les pales **20** et se trouvent ainsi dirigées vers la cible.

Une différence de diamètre est respectée entre la partie supérieure du cylindre creux supportant les pales **20** et celle comportant les orifices de pulvérisation **11**, afin d'assurer une bonne interception des gouttes par le flux d'air. Cette interception est d'autant assurée que la vitesse du flux d'air est supérieure à celle des gouttes.

La section de l'arbre creux **14** assurant l'entraînement du cylindre creux **10** par le moteur **7** est réduite progressivement vers le haut pour conserver une certaine flexibilité favorable à l'auto-alignement et à l'amortissement des vibrations parasites.

Le développement cyclonique du flux d'air est favorisé par la section des pales **20** qui comporte un extrados convexe 25 un intrados 26, un bord d'attaque elliptique 27 et un bord de fuite effilé **24**.

Plusieurs pulvérisateurs selon l'invention peuvent être montés sur une rampe, en respectant un intervalle permettant la juxtaposition des surfaces de projection, afin de pouvoir traiter une grande largeur en un seul passage.

Ce pulvérisateur est destiné principalement à être utilisé pour le traitement des cultures, mais il pourrait être utilisé aussi sous réserve d'adaptations mineures pour assurer des projections de liquides sur des surfaces dans le domaine industriel, notamment lorsque différents composants ne peuvent pour des raisons de miscibilité ou de réactions chimiques, être mélangés qu'au moment de la pulvérisation.

## Revendications

1. Appareil de pulvérisation centrifuge comportant un pulvérisateur tournant couplé à un ventilateur pour former avec lui un ensemble rotatif ; le pulvérisateur tournant étant constitué d'un cylindre creux (10) à paroi percée de multiples orifices (11) à sortie évasée, caractérisé en ce que les pales (20) du ventilateur sont fixées radialement autour du cylindre creux (10), à la partie supérieure de celui-ci, juste au dessus de la partie percée de multiples orifices (11), en ce que le cylindre creux (10) est relié à son moteur d'entrainement (7) par l'intermédiaire d'un arbre creux (14) offrant une certaine flexibilité, en ce que la sortie évasée des orifices de pulvérisation (11) est

troncoconique et en ce que le cylindre creux (10) est alimenté par un nombre d'injecteurs (40,50) correspondant à la diversité des produits à mélanger au moment de la pulvérisation.

2. Appareil de pulvérisation selon la revendication 1, caractérisé en ce que la partie du cylindre creux (10) sur laquelle se fixent les pales (20) du ventilateur est d'un diamètre supérieur à celui de la partie comportant les multiples orifices de pulvérisation (11).

3. Appareil de pulvérisation selon la revendication 1, caractérisé en ce que la partie du cylindre creux (10) sur laquelle se fixent les pales (20) du ventilateur comporte autant de méplats d'appui (12) que de pales (20).

4. Appareil de pulvérisation selon la revendication 3, caractérisé en ce que la distance des méplats d'appui (12) des pales (20) par rapport à l'axe de rotation correspond approximativement à 1,5 fois le rayon de la partie du cylindre creux (10) comportant les orifices de pulvérisation (11).

5. Appareil de pulvérisation selon les revendications 1 et 4, caractérisé en ce que les pales (20) du ventilateur sont reliées au cylindre creux (10) par l'intermédiaire d'un pied cylindrique (21) maintenu en appui dans un lamage (13) de même forme et de profondeur correspondante, réalisé dans les méplats d'appui (12) par l'intermédiaire d'une tige filetée (22) et d'un écrou auto-freineur (3).

6. Appareil de pulvérisation selon les revendications 1 et 5, caractérisé en ce que le pas des pales (20) du ventilateur est réglable.

7. Appareil de pulvérisation selon la revendication 1, caractérisé en ce que les pales (20) comportent un extrados convexe (25), un intrados concave (26), un bord d'attaque elliptique (27) et un bord de fuite effilé (24).

8. Appareil de pulvérisation selon la revendication 1, caractérisé en ce que la partie tronconique (11a) des orifices de pulvérisation à un diamètre de base $D = 1,5 d$ et une conicité $alpha$ minimum d'environ 10°.

9. Appareil de pulvérisation selon la revendication 1, caractérisé en ce que la longueur (L) de la partie cylindrique des orifices de pulvérisation (11) correspond à deux fois le diamètre d'entrée (d) des orifices.

10. Appareil de pulvérisation selon la revendication 1, caractérisé en ce que la hauteur de la partie du cylindre creux (10) sur laquelle se fixent les pales (20) représente environ 0,6 fois la hauteur totale de celui-ci.

11. Appareil de pulvérisation selon la revendication 1, caractérisé en ce que les buses multiples, que comportent les injecteurs (40,50), sont constituées d'orifices, de section décroissant vers l'extrémité des injecteurs répartis sur une longueur correspondant à la hauteur de la partie de cylindre creux comportant les orifices de pulvérisation (11).

12. Appareil de pulvérisation selon la revendication 1, caractérisé en ce que la paroi interne du cylindre creux (10) est séparée, dans le sens de la hauteur par une collerette (15) située juste au dessus de la première rangée d'orifices de pulvérisation (11).

**Patentansprüche**

1. Fliehkraftzerstäuber mit einem Drehzerstäuber, der mit einem Ventilator gekoppelt ist und mit diesem eine Drehkonstruktion bildet, wobei der Drehzerstäuber von einem Hohlzylinder (10) gebildet ist, dessen Wand mit zahlreichen Durchgangsöffnungen (11) mit aufgeweitetem Ausgang versehen ist, **dadurch gekennzeichnet, daß** die Flügel (20) des Ventilators radial um den Hohlzylinder (10) herum an dessen oberem Teil direkt über dem mit zahlreichen Durchgangsöffnungen (11) versehenen Teil angebracht sind, **daß** der Hohlzylinder (10) mit seinem Antriebsmotor (7) mittels einer eine bestimmte Flexibilität aufweisenden Hohlwelle (14) verbunden ist, **daß** der aufgeweitete Ausgang der Zerstäubungsöffnungen (11) kegelstumpfförmig ist **und daß** der Hohlzylindet (10) durch eine Anzahl von Injektoren (40,50) gespeist wird, die der Mannigfaltigkeit der bei der Zerstäubung zu mischenden Produkte entspricht.

2. Zerstäubet nach Anspruch 1, **dadurch gekennzeichnet, daß** der Teil des Hohlzylinders (10), an dem die Flügel (20) des Ventilators angebracht sind, einen größeren Durchmesser hat als der Teil, der die zahlreichen Zerstäubungsöffnungen (11) aufweist.

3. Zerstäuber nach Anspruch 1, **dadurch gekennzeichnet, daß** der Teil des Hohlzylinders (10), an dem die Flügel (20) des Ventilators angebracht sind, genausoviele Auflage-Abflachungen (12) wie Flügel (20) aufweist.

4. Zerstäuber nach Anspruch 3, **dadurch gekennzeichnet, daß** der Abstand der Auflage-Abflachungen (12) der Flügel (20) zur Rotationsachse etwa dem 1,5-fachen des Radius des die Zerstäubungsöffnungen (11) aufweisenden Teils des Hohlzylinders (10) entspricht.

5. Zerstäuber nach den Ansprüchen 1 und 4, **dadurch gekennzeichnet, daß** die Flügel (20) des Ventilators mit dem Hohlzylinder (10) mittels eines zylindrischen Fußes (21) verbunden sind, der in einer in den Auflage-Abflachungen (12) ausgeführten Vertiefung (13) gleicher Form und entsprechender Tiefe mittels eines Gewindebolzens (22) und einer selbsthemmenden Mutter (3) in Anlage gehalten wird.

6. Zerstäuber nach den Ansprüchen 1 und 5, **dadurch gekennzeichnet, daß** die Steigung der Flügel (20) des Ventilators verstellbar ist.

7. Zerstäuber nach Anspruch 1, **dadurch gekennzeichnet, daß** die Flügel (20) eine konvexe Oberseite (25), eine konkave Unterseite (26), eine elliptische Vorderkante (27) und eine spitz zulaufende Hinterkante (24) aufweisen.

8. Zerstäuber nach Anspruch 1, **dadurch gekennzeichnet, daß** der kegelstumpfförmige Teil (11a) der Zerstäubungsöffnungen einen Grundkreisdurchmesser D = 1,5.d und eine Konizität $\alpha_{min}$ von ca. 10° hat.

9. Zerstäuber nach Anspruch 1, **dadurch gekennzeichnet, daß** die Länge (L) des zylindrischen Teils der Zerstäubungsöffnungen (11) dem zweifachen Eintrittsdurchmesser (d) der Öffnungen entspricht.

10. Zerstäuber nach Anspruch 1, **dadurch gekennzeichnet, daß** die Höhe des Teils des Hohlzylinders (10), an dem die Flügel (20) angebracht sind, ca. 60% der Gesamthöhe desselben ausmacht.

11. Zerstäuber nach Anspruch 1, **dadurch gekennzeichnet, daß** die zahlreichen in den Injektoren (40,50) enthaltenen Düsen von Öffnungen gebildet sind, deren Querschnitt zum Ende der Injektoren hin abnimmt, wobei diese Öffnungen über eine Länge verteilt sind, die der Höhe des die Zerstäubungsöffnungen (11) aufweisenden Teils des Hohlzylinders entspricht.

12. Zerstäuber nach Anspruch 1, **dadurch gekennzeichnet, daß** die Innenwand des Hohlzylinders (10) der Höhe nach durch einen Bund (15) abgeteilt ist, der direkt über der ersten Reihe der Zerstäubungsöffnungen (11) liegt.

**Claims**

1. Centrifugal spraying appliance comprising a rotary sprayer coupled to a fan to form with it a rotary assembly, the rotary sprayer consisting of a hollow cylinder (10) having a wall pierced with multiple orifices (11) of widened outlet, characterised in that the vanes (20) of the fan are fastened radially around the hollow cylinder (10) to the upper part of the latter, just above the part pierced with multiple orifices (11), and in that the hollow cylinder (10) is connected to its drive motor (7) by means of a hollow shaft (14) affording some flexibility, in that the widened outlet of the spray orifices (11) is frustoconical, and in that the hollow cylinder (10) is fed by a number of injectors (40, 50) corresponding to the diversity of the products to be mixed at the moment of spraying.

2. Spraying appliance according to Claim 1, characterised in that the part of the hollow cylinder (10) to which the vanes (20) of the fan are fastened is of a diameter larger than that of the part comprising the multiple spray orifices (11).

3. Spraying appliance according to Claim 1, characterised in that the part of the hollow cylinder (10) to which the vanes (20) of the fan are fastened comprises as many bearing flats (12) as vanes (20).

4. Spraying appliance according to Claim 3, characterised in that the distance between the bearing flats (12) of the vanes (20) in relation to the axis of rotation corresponds approximately to 1.5 times the radius of the part of the hollow cylinder (10) comprising the spray orifices (11).

5. Spraying appliance according to Claims 1 and 4, characterised in that the vanes (20) of the fan are connected to the hollow cylinder (10) by means of a cylindrical foot (21) held bearing in a countersink (13) of the same shape and of corresponding depth, produced in the bearing flats (12) by means of a threaded rod (22) and a self-locking nut (3).

6. Spraying appliance according to Claims 1 and 5, characterised in that the pitch of the vanes (20) of the fan is adjustable.

7. Spraying appliance according to Claim 1, characterised in that the vanes (20) comprise a convex top surface (25), a concave lower surface (26), an elliptic leading edge (27) and a tapered trailing edge (24).

8. Spraying appliance according to Claim 1, characterised in that the frustoconical part (11a) of the spray orifices has a base diameter D = 1.5 d and a conicity alpha of a minimum of approximately 10°.

9. Spraying appliance according to Claim 1, characterised in that the length (L) of the cylindrical part of the spray orifices (11) corresponds to twice the inlet diameter (d) of the orifices .

10. Spraying appliance according to Claim 1, characterised in that the height of the part of the hollow cylinder (10) to which the vanes (20) are fastened represents approximately 0.6 times the total height of the latter.

11. Spraying appliance according to Claim 1, characterised in that the multiple nozzles which the injectors (40, 50) possess consist of orifices of cross-section decreasing towards the end of the injectors and distributed over a length corresponding to the height of the part of the hollow cylinder comprising the spray orifices (11).

12. Spraying appliance according to Claim 1, characterised in that the inner wall of the hollow cylinder (10) is separated in the height direction by a collar (15) located just above the first row of spray orifices (11).

FIG.1

# FIG.2

# FIG.3

# FIG.4